# EUROPÄISCHE PATENTANMELDUNG

(11) **EP 4 530 224 A1**
(43) Veröffentlichungstag der Anmeldung: **02.04.2025**
(21) Anmeldenummer: 23199655.4
(22) Anmeldetag: 26.09.2023
(51) Int. Cl.: B65G 1/04, B65G 1/137, G06Q 10/087

(54) **VERFAHREN ZUM LAGERN VON STÜCKGUT IN EINER KOMMISSIONIERVORRICHTUNG SOWIE KOMMISSIONIERVORRICHTUNG**

(71) Anmelder: Becton Dickinson Rowa Germany GmbH, 53539 Kelberg (DE)
(72) Erfinder: Bause, Andreas, 56645 Nickenich (DE); Reif, Dennis, 56727 Mayen (DE); Bühning, Axel, 53520 Müllenbach (DE); Groß, Dietmar, 53539 Kelberg (DE); Faber, Michael, 54634 Bitburg (DE); Brokonier, Stephan, 54570 Neroth (DE); Raschke, Alexander, 53539 Kelberg (DE)
(74) Vertreter: Zenz Patentanwälte Partnerschaft mbB

(57) **Zusammenfassung**

Die vorliegende Erfindung betrifft ein Verfahren zum Lagern von Stückgut in einer Kommissioniervorrichtung (1) sowie eine Kommissioniervorrichtung (1) als solche. Um Fehlauslagerungen zu vermeiden ist vorgesehen, dass eine Steuereinrichtung (70) eine Lagerabschnitt-Datenbank betreibt oder auf diese zugreifen kann, die für eine Mehrzahl von Lagerabschnitten zumindest eine Gewichtsvorgabe aufweist, wobei mit einer Identifizierungseinrichtung (80) ein Identifizierer eines Stückguts gelesen wird, die Dimensionen des einzulagernden Stückguts ermittelt werden, das Gewicht des einzulagernden Stückguts ermittelt wird, basierend auf zumindest den Dimensionen und dem Gewicht des einzulagernden Stückguts ein Lagerplatz für das Stückgut ermittelt wird, wobei bei dem Ermitteln des Lagerplatzes die Gewichtsvorgaben der Lagerabschnitte berücksichtigt werden und lediglich Lagerplätze bei solchen Lagerabschnitten berücksichtigt werden, deren Gewichtsvorgaben bei Lagerung des einzulagernden Stückgutes eingehalten werden, und schließlich das einzulagernde Stückgut mit einem Greifer (60) auf den ermittelten Lagerplatz bewegt wird.

## Beschreibung

Die vorliegende Erfindung betrifft ein Verfahren zum Lagern von Stückgut, insbesondere Arzneimittelpackungen, in einer Kommissioniervorrichtung sowie eine Kommissioniervorrichtung als solche.

Zur platzsparenden Lagerung von Arzneimittelpackungen werden in Apotheken häufig automatische Kommissioniervorrichtungen eingesetzt. Die Arzneimittelpackungen werden in entsprechenden Kommissioniervorrichtungen auf einer Vielzahl von Regalböden chaotisch gelagert, d. h. die Arzneimittelpackungen werden in der Kommissioniervorrichtung nicht auf festen, vordefinierten Lagerplätzen gelagert, sondern auf solchen Regalböden, auf denen ein passender Lagerplatz vorhanden ist. Dadurch kann unnötiges Leervolumen vermieden und die Anzahl der eingelagerten Arzneimittelpackungen pro Grundfläche deutlich erhöht werden.

Zur Einlagerung einer Arzneimittelpackung wird diese nach bekannten Verfahren der Stückgutlagerung identifiziert, ggf. vermessen und in einem vorgegebenen Ablagebereich einer Einlagerungseinrichtung der Kommissioniervorrichtung abgelegt. Anschließend wird die Arzneimittelpackung in einen Zugriffsbereich eines Greifers, wie er beispielsweise aus der EP 3 431 421 A1 bekannt ist, eines Bediengeräts innerhalb der Kommissioniervorrichtung bewegt, von dem Greifer aufgenommen und zu dem von einer Steuereinrichtung bestimmten Lagerplatz bewegt.

Abhängig insbesondere von der Breite eines Regalbodens und der Art der auf einem Regalboden gelagerten Arzneimittelpackungen kann es vorkommen, dass sich der Regalboden unter dem Gewicht der gelagerten Arzneimittelpackungen geringfügig durchbiegt, was bei der Entnahme aber auch der Einlagerung einer Arzneimittelpackung zu Problemen führen kann, da die Ausrichtung des verwendeten Greifers zum Regalboden nicht mehr optimal ist. Je nach Ausmaß der Durchbiegung kann dies z.B. dazu führen, dass eine Arzneimittelpackung nicht mehr entnommen werden kann. Die Durchbiegung kann sogar so weit gehen, dass Arzneimittelpackungen unter dem gebogenen Regalboden nicht mehr problemlos ein- oder ausgelagert werden können.

Es ist Aufgabe der vorliegenden Erfindung, ein Verfahren zum Lagern von Stückgut in einer Kommissioniervorrichtung bereitzustellen, bei welchem die Gefahr von Fehlauslagerungen und Fehleinlagerungen aufgrund einer Durchbiegung eines Regalbodens vermieden wird. Es ist ferner Aufgabe der vorliegenden Erfindung, eine entsprechende Kommissioniervorrichtung bereitzustellen.

Die Aufgabe wird gelöst durch ein Verfahren zum Lagern von Stückgut in einer Kommissioniervorrichtung nach Patentanspruch 1. Die bei dem erfindungsgemäßen Verfahren verwendete Kommissioniervorrichtung umfasst zumindest eine Regalreihe mit einer Mehrzahl von Regalböden, wobei jeder Regalboden zumindest einen Lagerabschnitt mit zumindest einem Lagerplatz aufweist. Ferner umfasst die Kommissioniervorrichtung eine Steuereinrichtung, eine Einlagerungseinrichtung, eine Identifizierungseinrichtung sowie ein Bediengerät mit einem Greifer für Stückgut, wobei die Steuereinrichtung eine Lagerabschnitt-Datenbank betreibt bzw. auf diese zugreifen kann, die für eine Mehrzahl von Lagerabschnitten zumindest eine Gewichtvorgabe aufweist. Bei dem erfindungsgemäßen Verfahren wird a) mit der Identifizierungseinrichtung ein Identifizierer (ID) eines einzulagernden Stückguts gelesen und b) die Dimensionen sowie c) das Gewicht des einzulagernden Stückguts werden ermittelt. Wie genau (und in welcher Reihenfolge) die Ermittlung der Dimensionen sowie des Gewichts des einzulagernden Stückguts durchgeführt wird, ist für die Erfindung nicht wesentlich. Sofern diese Daten zu dem Identifizierer in einer Datenbank, auf die die Steuereinrichtung zugreifen kann, gespeichert sind, können die Daten einfach aus der Datenbank bezogen werden. Alternativ können sie mit entsprechenden Messeinrichtungen, die mit der Kommissioniervorrichtung (bzw. der Steuereinrichtung) gekoppelt sind und mit welchen Bauteile der Kommissioniervorrichtung versehen sein können, erfasst und ggf. in einer Datenbank abgelegt werden. Auf diese kann dann bei gleichartigen Stückgütern zurückgegriffen werden.

Sobald die vorgenannten Daten ermittelt sind, wird d) basierend auf zumindest den Dimensionen und dem Gewicht des einzulagernden Stückguts ein Lagerplatz für das Stückgut ermittelt, wobei bei dem Ermitteln des Lagerplatzes die Gewichtsvorgaben der Lagerabschnitte berücksichtigt werden und lediglich solche Lagerabschnitte berücksichtigt werden, deren Gewichtsvorgaben bei Lagerung des einzulagernden Stückgutes eingehalten werden. Aus dem vorgenannten Schritt wird ersichtlich, dass es für die Erfindung wesentlich ist, dass die Dimensionen und das Gewicht bekannt sind, nicht aber, wie diese ermittelt werden. Nachdem ein Lagerplatz ermittelt ist, wird e) das einzulagernde Stückgut mit dem Greifer auf den ermittelten Lagerplatz bewegt.

Erfindungsgemäß wird der Lagerplatz also nicht mehr allein auf der Basis der Dimensionen eines einzulagernden Stückguts und den freien Bereichen auf den Regalböden bestimmt (also "rein" chaotisch), sondern es werden die Gewichtsvorgaben der Lagerabschnitte berücksichtigt. Wenn das einzulagernde Stückgut die Gewichtsvorgabe eines Lagerabschnitts nicht erfüllt, scheidet der Lagerplatz oder scheiden die Lagerplätze dieses Lagerabschnitts für die Lagerung aus, unabhängig davon, ob basierend auf den Dimensionen ein Lagerplatz vorhanden wäre.

Indem man die Gewichtsvorgaben der einzelnen Lagerabschnitte derart festlegt, dass eine Überbelastung eines Regalbodens, die zu einer Durchbiegung führt, vermieden wird, können entsprechende Fehlauslagerungen vermieden werden. Wie genau dazu die Gewichtsvorgaben zu wählen sind, ist abhängig von den Dimensionen eines Regalbodens sowie dem verwendeten Regalbodenmaterial und dessen Stärke. Entsprechende Gewichtsvorgaben sind für einen Fachmann bei bekannten vorgenannten Kennzahlen eines Regalbodens einfach festzulegen.

Bei einem Lagerplatz im Sinne der vorliegenden Erfindung handelt es sich nicht um einen vorgegebenen Bereich mit einer vorgegebenen Abmessung von X * Y cm, sondern um einen variablen Bereich, der sich nach den Abmessungen eines einzulagernden Stückgutes bestimmt, also um einen "virtuellen" Lagerplatz.

Wie genau ein Lagerabschnitt dimensioniert ist, ist abhängig von der genauen Ausgestaltung eines Regalbodens. Wenn dieser in einer Längsrichtung einer Kommissioniervorrichtung "breiter" ist, werden regelmäßig mehr Lagerabschnitte vorhanden sein als bei einem "schmaleren" Regalboden. Auch ist es denkbar, dass Bereiche eines Regalbodens, die nahe den tragenden Elementen sind (also Seiten und, sofern vorhanden, Rückwand), Lagerabschnitte mit einer anderen Gewichtsvorgabe umfassen als Bereiche weiter entfernt von solchen tragenden Elementen.

Wie genau die Gewichtsvorgabe eines Lagerabschnitts gestaltet ist, kann frei definiert werden. Bei einer Ausführungsform ist es denkbar, dass die Gewichtsvorgabe ein Maximalgewicht eines Stückgutes für einen Lagerabschnitt umfasst. In einem solchen Fall dürfen in einem Lagerabschnitt also nur solche Stückgüter eingelagert werden, die dieses Maximalgewicht nicht überschreiten, wobei ggf. noch die Anzahl solcher Stückgüter beschränkt sein kann. Die Gewichtsvorgabe kann lauten - in Lagerabschnitt LA1 maximal drei Stückgüter mit einem Maximalgewicht von jeweils 100 g.

Bei einer alternativen Ausführungsform, die mit der vorgenannten ggf. kombiniert werden kann, umfasst die Gewichtsvorgabe ein Maximalflächengewicht für einen Lagerabschnitt. Das Maximalflächengewicht besagt, dass ein Stückgut pro cm² Lagerfläche dieses Maximalflächengewicht nicht überschreiten darf. Wenn die Gewichtsvorgabe "nur" das Maximalflächengewicht umfasst, können in dem Lagerabschnitt beliebig viele Stückgüter, die die Gewichtsvorgabe erfüllen, gelagert werden. Wenn die Gewichtsvorgabe auch das Maximalgewicht umfasst, ist dieses ebenfalls zu berücksichtigen (sowie ggf. die Anzahl der Stückgüter mit Maximalgewicht).

Bei einer weiteren alternativen Ausführungsform, die mit einer oder beiden der vorgenannten kombiniert sein kann, umfasst die Gewichtsvorgabe ein Maximalgesamtgewicht für einen Lagerabschnitt. In einem solchen Fall weist die Lagerabschnitt-Datenbank für Lagerabschnitte mit Maximalgesamtgewicht ferner eine Ist-Belegung auf, und diese wird nach dem Ermitteln des Lagerplatzes für das einzulagernde Stückgut um das Gewicht des einzulagernden Stückguts erhöht. Wenn nur das Maximalgesamtgewicht relevant ist, können Stückgüter mit beliebigem Maximalgewicht und Maximalflächengewicht gelagert werden, solange das Maximalgesamtgewicht nicht überschritten wird. Auch die Gewichtsvorgabe Maximalgesamtgewicht kann mit einer oder beiden der vorgenannten Gewichtsvorgaben kombiniert werden bzw. diese umfassen. So ist es denkbar, dass die Gewichtsvorgabe all die vorgenannten Kriterien umfasst.

Wie bereits oben angedeutet, ist es nicht wesentlich, wie genau das Gewicht eines einzulagernden Stückguts ermittelt wird. Bei einer bevorzugten Ausführungsform ist es vorgesehen, dass das Gewicht eines einzulagernden Stückguts auf der Basis des Identifizierers ermittelt wird. In einem solchen Fall ist ein zusätzliches (zeitaufwendiges) Wiegen überflüssig.

Eine Ermittlung des Gewichts über den Identifizierer ist aber nur möglich, wenn eine Datenbank vorhanden ist, die diese Informationen umfasst. Sofern dies nicht gewährleistet ist, ist es bei einer Ausführungsform vorgesehen, dass die Kommissioniervorrichtung eine Wiegeeinrichtung umfasst, und das Gewicht eines einzulagernden Stückguts mit der Wiegeeinrichtung ermittelt wird. Ein solches Verfahren ist flexibler, auch wenn ein weiteres Bauteil für das Ermitteln des Gewichts notwendig ist.

Die Wiegeeinrichtung kann außerhalb der Kommissioniervorrichtung angeordnet sein, lediglich eine Kopplung mit der Steuereinrichtung ist notwendig. Es kann aber auch vorgesehen sein, dass ein Wiegen innerhalb der Kommissioniervorrichtung vorzugsweise automatisch und "on the fly" durchgeführt wird. Bei einer bevorzugten Ausführungsform des Verfahrens ist es daher vorgesehen, dass die Einlagerungseinrichtung ein Einlagerungsband mit einem Antriebsmotor umfasst und das Gewicht des einzulagernden Stückguts ermittelt wird, indem der zum Bewegen des Einlagerungsbandes notwendige Motorstrom gemessen und basierend darauf das Gewicht ermittelt wird. Bei dieser Ausführungsform wird eine ohnehin vorhandene Einrichtung neben dem eigentlichen Verwendungszweck dazu genutzt, das Gewicht eines einzulagernden Stückguts zu ermitteln. Eine eigenständige Wiegeeinrichtung ist in diesem Fall nicht notwendig.

Die Aufgabe der Erfindung wird ferner gelöst durch eine Kommissioniervorrichtung für Stückgut nach Anspruch 8. Die erfindungsgemäße Kommissioniervorrichtung umfasst
zumindest eine Regalreihe mit einer Mehrzahl von Regalböden, wobei jeder Regalboden zumindest einen Lagerabschnitt mit zumindest einem Lagerplatz aufweist,
ein vor der Regalreihe horizontal in einer X-Richtung (X-Achse) und vertikal in einer Z-Richtung (Z-Achse) verfahrbares, einen Greifer aufweisendes Bediengerät,
zumindest eine Einlagerungseinrichtung, mit welcher Stückgüter in die Kommissioniervorrichtung bewegt werden können und von welcher der Greifer Stückgüter entnehmen kann,
zumindest eine Identifizierungseinrichtung zum Lesen eines Identifizierer (ID) eines einzulagernden Stückguts,
eine Entladeeinrichtung, an welche Stückgüter zum Auslagern aus der Kommissioniervorrichtung übergeben werden können,
sowie eine mit dem Bediengerät, der Identifizierungseinrichtung und der Einlagerungseinrichtung gekoppelte Steuereinrichtung, wobei die Steuereinrichtung eine Lagerabschnitt-Datenbank betreibt bzw. auf diese zugreifen kann, die für eine Mehrzahl von Lagerabschnitten zumindest eine Gewichtvorgabe aufweist, wobei die Steuereinrichtung ausgebildet ist, die Verfahrensschritte entsprechend dem oben beschriebenen Verfahren auszuführen. Da die Steuereinrichtung erfindungsgemäß eine Lagerabschnitt-Datenbank mit Gewichtsvorgaben führt bzw. auf diese zugreifen kann und derart ausgeführt ist, dass das erfindungsgemäße Verfahren ausgeführt werden kann, ist es mit der erfindungsgemäßen Kommissioniervorrichtung möglich, Fehlauslagerungen von Stückgütern basierend auf einer Durchbiegung eines Regalbodens zu vermeiden.

Bei einer bevorzugten Ausführungsform umfasst die Kommissioniervorrichtung eine Wiegeeinrichtung zum Ermitteln des Gewichts des einzulagernden Stückguts. Eine entsprechende Ausführungsform ist dann von Vorteil, wenn zu einem Identifizierer (oder nicht zu allen) kein Gewicht in einer Datenbank gespeichert ist - das Gewicht wird dann über die Wiegeeinrichtung ermittelt.

Alternativ kann es vorgesehen sein, dass die Einlagerungseinrichtung ein Förderband mit einem Antriebsmotor und einem Fördergurt umfasst, wobei das Gewicht des einzulagernden Stückguts ermittelt wird, indem der zum Bewegen des Fördergurts notwendige Motorstrom gemessen und basierend darauf das Gewicht ermittelt wird. Bei einer entsprechenden Ausführungsform wird das ohnehin vorhandene Bauteil der Einlagerungseinrichtung dazu verwendet, auch das Gewicht eines einzulagernden Stückgutes zu ermitteln. Es kann vorgesehen werden, dass unter dem Fördergurt eine Gurtauflage angeordnet wird, über die der Fördergurt bewegt wird. Dies ist insbesondere dann sinnvoll, wenn der Fördergurt lang ist und/oder zu erwarten ist, dass das Gewicht des einzulagernden Stückgutes so hoch ist, dass eine übermäßige Spannung des Fördergurtes erforderlich ist. In diesem Fall wird das Gewicht nicht nur aus dem Motorstrom ermittelt, sondern es wird zusätzlich die Auflagefläche des Stückgutes berücksichtigt, da diese den Reibungswiderstand zwischen Fördergurt und Gurtauflage (und damit den Motorstrom) beeinflusst.

Bei einer weiteren bevorzugten Ausführungsform umfasst die Einlagerungseinrichtung ein Förderband mit einem Fördergurt, und die Wiegeeinrichtung ist derart unterhalb eines Abschnitts des Fördergurts angeordnet, dass bei dem Bewegen des einzulagernden Stückguts auf dem Einlagerungsband über die Wiegeeinrichtung das Gewicht ermittelt wird. Auch diese Ausführungsform ist dazu geeignet, bestehende Kommissioniervorrichtungen erfindungsgemäß weiterzubilden.

Bei einer weiteren bevorzugten Ausführungsform umfasst die Wiegeeinrichtung ein Förderband mit einem Antriebsmotor und einem Fördergurt, wobei das Gewicht des einzulagernden Stückguts ermittelt wird, indem der zum Bewegen des Fördergurts notwendige Motorstrom gemessen und basierend darauf das Gewicht ermittelt wird. Bei dieser Ausführungsform ist die Einlagerungseinrichtung stromab der Wiegeeinrichtung angeordnet und umfasst ebenfalls ein Förderband, an welches das einzulagernde Stückgut übergeben wird. Bei dieser Ausführungsform wird das Gewicht eines einzulagernden Stückguts "zu Beginn" des Einlagerungsvorgangs ermittelt und dieses kann dann an die Einlagerungseinrichtung übergeben werden, auf welcher das Stückgut auf das Aufnehmen durch den Greifer "wartet".

Bei einer alternativen Ausführungsform umfasst der Greifer des Bediengeräts ein Wiegemittel, mit welchem das Gewicht eines auf den Greifer bewegten Stückguts ermittelbar ist. Bei dieser Ausführungsform wird das Gewicht erst relativ spät im Einlagerungsprozess ermittelt, jedoch ausreichend früh, um erfindungsgemäß einen Lagerplatz zu ermitteln. Bei dieser Ausführungsform umfasst die Kommissioniervorrichtung kein weiteres eigenständiges Bauteil, vielmehr ist in den Greifer ein Wiegemittel integriert. Eine entsprechende Ausführungsform kann bei Modifikation des Greifers auch bestehende Kommissioniervorrichtungen erfindungsgemäß umgestalten.

Das Material und die Materialstärke gibt vor, welche Gewichtsvorgaben für einen Regalboden maximal zulässig sind, um eine Durchbiegung wirksam zu minimieren. Aus Kosten- und Platzgründen ist es bei einer bevorzugten Ausführungsform vorgesehen, dass die Kommissioniervorrichtung Regalböden mit unterschiedlicher Traglast aufweist. Die schweren Stückgüter können dann gezielt auf den "Schwerlastregalböden" gelagert werden, die für die üblichen Stückgüter nicht notwendig sind.

Im Nachfolgenden werden bevorzugte Ausführungsformen der erfindungsgemäßen Kommissioniervorrichtung sowie verschiedene bevorzugte Ausführungsformen des erfindungsgemäßen Verfahrens detaillierter unter Bezugnahme auf die beigefügte Zeichnung beschrieben, in welcher
Figur 1 eine perspektivische Ansicht einer ersten Ausführungsform der Kommissioniervorrichtung zeigt,
Figur 2 eine Detailansicht des Frontbereiches der ersten Ausführungsform zeigt,
Figuren 3a - 3d schematische Teilansichten weiterer bevorzugter Ausführungsformen der Kommissioniervorrichtung zeigen,
Figuren 4a - 4d schematische Ansichten eines Regalbodens mit unterschiedlichen Lagerabschnitten zeigen, und
Figur 5 ein Flussdiagramm einer bevorzugten Ausführungsform des erfindungsgemäßen Verfahrens zeigt.

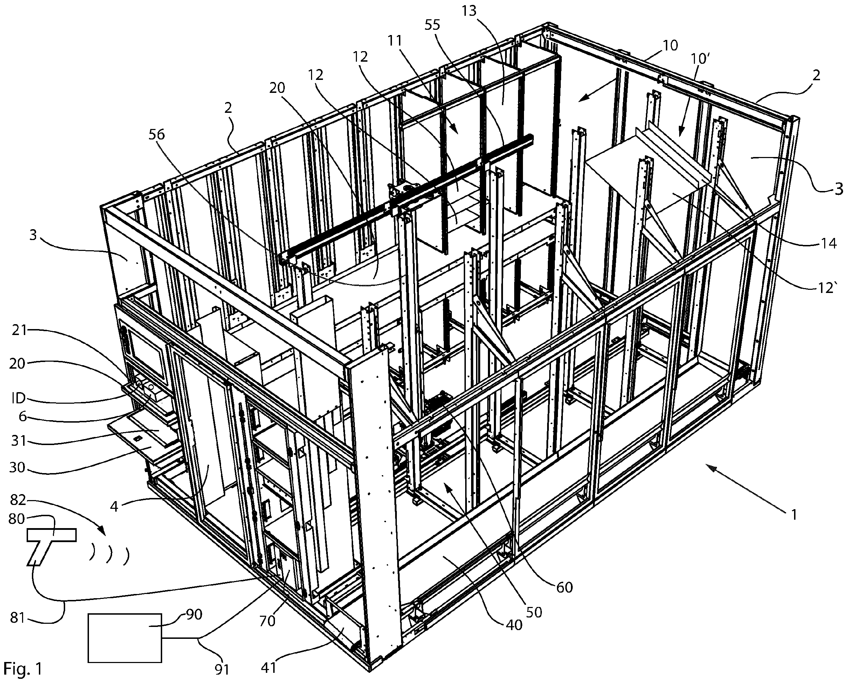

Figur 1 zeigt eine perspektivische Darstellung einer ersten Ausführungsform der erfindungsgemäßen Kommissioniervorrichtung 1. Mit der in den nachfolgenden Figuren gezeigten Ausführungsform der Kommissioniervorrichtung (oder zumindest Teilen davon) werden Arzneimittelpackungen als Stückgut gelagert, wobei im Folgenden auch der Begriff Arzneimittelpackung (beispielhaft für den Begriff Stückgut) verwendet wird. Alternativ sind auch Nahrungsergänzungsmittelpackungen denkbar. Generell alle Stückgüter, die mit einem nachfolgend beschriebenen Greifer gehandhabt werden können (Verpackungen mit Schrauben oder anderen kleinen Gütern); üblich ist jedoch die Verwendung für die Lagerung von Arzneimittelpackungen.

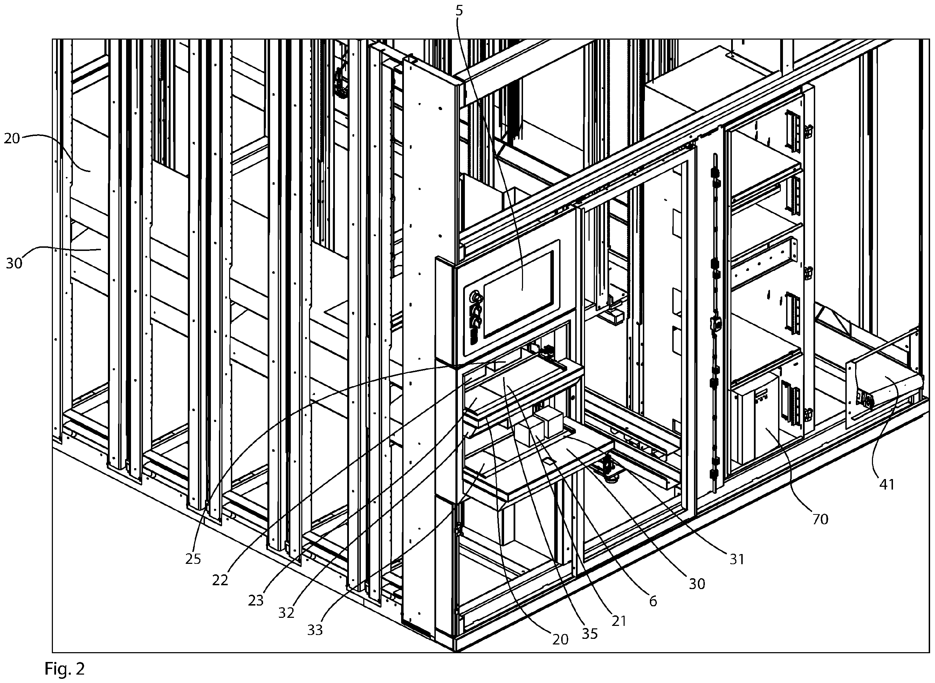

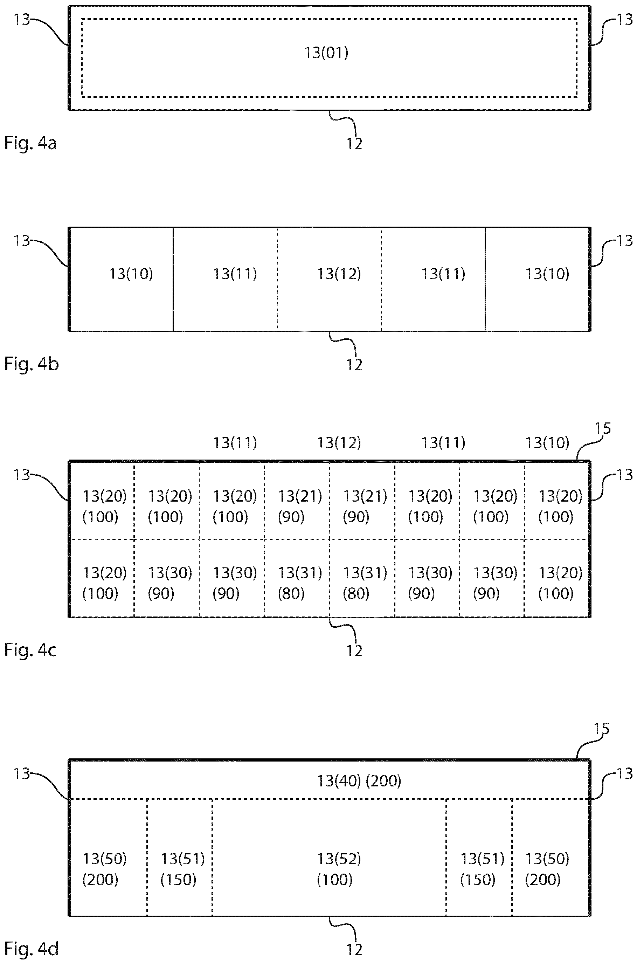

Die Kommissioniervorrichtung 1 besteht aus einer Rahmenkonstruktion 2, an der mehrere Verkleidungselemente 3 angebracht sind. Aus Gründen der Übersichtlichkeit sind eine Vielzahl der Verkleidungselemente sowie einige Elemente der Gerüststruktur 2 nicht dargestellt. Die Kommissioniervorrichtung 1 umfasst eine erste Regalreihe 10 mit mehreren Regalen 11, die jeweils mehrere übereinander angeordnete, sich in einer horizontalen Ebene erstreckende Regalböden 12 mit mindestens einem Lagerabschnitt mit mindestens einem Lagerplatz aufweisen (in Fig. 1 sind nur drei Regalböden 12 dargestellt; weitere Regalböden sind über, unter und neben den dargestellten Regalböden angeordnet). In den Figuren 1 und 2 sind die Lagerabschnitte und die Lagerplätze als solche nicht dargestellt; hierzu wird auf die Figuren 4a - 4d verwiesen.

Die einzelnen Regale 11 der ersten Regalreihe 10 werden durch Regalwände 13 und eine Mehrzahl der vorgenannten Regalböden 12 gebildet. Im gezeigten Beispiel sind alle Stirnkanten (Ladekanten) der Regalböden in einer vertikalen Ebene angeordnet, was das Ein- und Auslagern von Stückgütern bzw. Arzneimittelpackungen in und aus den Regalböden erleichtert. Die dargestellten Regale sind für die chaotische Lagerung von Arzneimittelpackungen ausgelegt.

Bei der dargestellten Kommissioniervorrichtung ist gegenüber der ersten Regalreihe 10 eine zweite Regalreihe 10` vorgesehen, die jedoch aus Gründen der Übersichtlichkeit nur angedeutet ist; dargestellt sind lediglich einzelne Elemente des Traggerüstes für diese Regalreihe und ein Regalboden 12` mit einem Lagerschacht 14 für die sortenreine Lagerung. Die Lagerschächte der Kommissioniervorrichtung sind für die Lagerung von Schnelldrehern vorgesehen und für die vorliegende Erfindung nicht relevant.

Die dargestellte Ausführungsform der Kommissioniervorrichtung umfasst zwei übereinander angeordnete Einlagerungseinrichtungen 20, 30, die in die erste Regalreihe 10 integriert sind, so dass oberhalb und unterhalb der beiden Einlagerungseinrichtungen 20, 30 Regalböden 12 vorgesehen sind. Die Einlagerungseinrichtungen 20, 30 ragen an der Vorderseite der Kommissioniervorrichtung aus dieser heraus und weisen an dem vorstehenden Teil jeweils einen Ablagebereich 21, 31 auf, auf dem Arzneimittelpackungen zur Einlagerung abgelegt werden können. In Figur 1 sind auf dem Ablagebereich 21 der oberen Einlagerungseinrichtung 20 zwei Arzneimittelpackungen 6 angeordnet.

Die Ablagebereiche 21, 31 sind keine Bauteile als solche, sondern spezielle Bereiche der Einlagerungseinrichtungen, in denen die Arzneimittelpackungen ggf. entsprechend einer Ablageanweisung angeordnet werden. Die Ablagebereiche können z. B. durch Markierungen auf einer als Förderband ausgebildeten Einlagerungsvorrichtung gebildet sein. Alternativ kann auch eine Lichtschranke einen Ablagebereich markieren. Schließlich ist es denkbar, dass eine bewegliche Schranke einen Lagerbereich definiert.

Zwischen der dargestellten ersten Regalreihe und der lediglich angedeuteten zweiten Regalreihe ist ein an einer Führung horizontal und vertikal verfahrbares Bediengerät 50 mit einem Greifer 60 vorgesehen, wie er beispielsweise in der EP 3 431 421 A1 näher beschrieben ist, deren Offenbarungsgehalt hinsichtlich des Greifers hiermit in die vorliegende Anmeldung übernommen wird. Der Greifer 60 ist entlang einer nur angedeuteten Horizontalführung 55 und einer Vertikalführung 56 in einem Gang zwischen den beiden Regalreihen verfahrbar.

In der Kommissioniervorrichtung ist ferner eine Entladeeinrichtung 40 angeordnet, die hier als Bandförderer ausgebildet und zwischen der zweiten Regalreihe und der rechten Außenwand der Kommissioniervorrichtung angedeutet ist. Über die Entladeeinrichtung werden Arzneimittelpackungen, die auf die Entladeeinrichtung bewegt werden, zu einem Entnahmebereich 41 der Entladeeinrichtung bewegt. Die Arzneimittelpackungen können auf die Entladeeinrichtung gelangen, indem sie beispielsweise mit dem Bediengerät 50, gegebenenfalls unter Zwischenschaltung eines nicht dargestellten Hilfsauslagerungswegs, auf die Entladeeinrichtung bewegt werden. Bei geneigten Lagerschächten können die Arzneimittelpackungen einfach durch Auslösen einer an einem Ende eines Lagerschachtes angeordneten Auslöseeinrichtung ausgelagert werden. Bei den geneigten Lagerschächten können die Arzneimittelpackungen einfach durch Auslösen einer bei einem Ende eines Lagerschachtes angeordneten Auslöseeinrichtung auf die Entladeeinrichtung bewegt werden. In einem solchen Fall fallen die Arzneimittelpackungen einfach schwerkraftbedingt auf die Entladeeinrichtung.

In Figur 1 ist im Frontbereich der Kommissioniervorrichtung eine Steuereinrichtung 70 angeordnet, die mit dem Bediengerät und üblicherweise mit den Ein- und Entladeeinrichtungen gekoppelt ist. Erfindungsgemäß betreibt die Steuereinrichtung eine Lagerabschnitt-Datenbank, die für eine Mehrzahl von Lagerabschnitten mindestens eine Gewichtsvorgabe aufweist. Ferner ist die Steuereinrichtung zur Durchführung des erfindungsgemäßen Verfahrens ausgebildet (Einzelheiten hierzu werden unter Bezugnahme auf das erfindungsgemäße Verfahren beschrieben). In der Mitte des Frontbereichs der Kommissioniervorrichtung ist eine Türöffnung 4 vorgesehen, durch die die Vorrichtung zu Wartungszwecken und im Störungsfall betreten werden kann.

In Figur 1 ist ferner symbolisch eine Identifizierungseinrichtung 80 angedeutet, die über eine Leitung 81 oder über eine drahtlose Verbindung 82 mit der Steuereinrichtung 70 gekoppelt ist. In anderen Ausführungsformen kann die Identifizierungseinrichtung auch ein integraler Bestandteil der Kommissioniervorrichtung sein. Mit der Identifizierungseinrichtung 80 wird der Identifizierer (ID; angedeutet als Kreis auf jeder Arzneimittelverpackung) jeder Arzneimittelverpackung vor dem Ablegen in den Ablagebereich ermittelt. Die genaue Ausgestaltung des Identifizierers und damit der Identifiziereinrichtung ist für die vorliegende Erfindung von untergeordneter Bedeutung. Wesentlich ist, dass jede mit dem erfindungsgemäßen Verfahren einzulagernde Arzneimittelpackung einen Identifizierer umfasst und dass ein Identifizierer eine Arzneimittelpackung derart identifiziert, dass die PZN-Nummer oder vergleichbare Daten der einzulagernden Arzneimittelpackung bekannt sind. Der Identifizierer muss nicht notwendigerweise die eindeutige Seriennummer der Arzneimittelpackung enthalten, diese Information ist für die vorliegende Erfindung nicht zwingend erforderlich.

In Figur 1 ist ferner symbolisch eine Wiegeeinrichtung 90 angedeutet, die über eine Leitung 91 mit der Steuereinrichtung 70 gekoppelt ist. Mit Hilfe der Wiegeeinrichtung 90 kann das Gewicht eines einzulagernden Stückguts ermittelt werden, falls die Steuereinrichtung nicht in der Lage ist, dieses über den Identifizierer zu ermitteln. Die Wiegeeinrichtung kann in alternativen Ausführungsformen auch innerhalb der Kommissioniervorrichtung angeordnet sein (siehe hierzu die nachfolgenden Ausführungsformen). Wenn sichergestellt ist, dass das Gewicht aller einzulagernden Stückgüter über den Identifizierer ermittelt werden kann, kann auf die Wiegeeinrichtung verzichtet werden. Dies ist denkbar, wenn die Steuereinrichtung auf eine ständig aktualisierte Datenbank zugreifen kann, in der über den Identifizierer jedes einzulagernden Stückguts dessen Gewicht eindeutig ermittelt werden kann. Aber auch wenn dies gewährleistet ist, kann eine Wiegeeinrichtung vorgesehen werden, die dann in erster Linie als (weitere) Verifikationseinrichtung dient (um sicherzustellen, dass genau das Stückgut, dessen Identifizierer eingelesen wurde, auch eingelagert wurde).

Figur 2 zeigt eine Detailansicht des Frontbereichs der ersten Ausführungsform der Kommissioniervorrichtung, wobei in dieser Ansicht insbesondere der Ablagebereich der Einlagerungseinrichtung 20, 30 zu erkennen ist. In Figur 2 sind im Ablagebereich 31 der unteren Einlagerungseinrichtung 30 zwei Arzneimittelpackungen 6 angeordnet. Oberhalb der Ablagebereiche 21, 31 ist bei der gezeigten Ausführungsform jeweils ein Auflageerfassungssensor 22, 32 angedeutet, mit dem ein Erfassungsbereich 23, 33 eines Ablagebereichs 21, 31 überwacht wird. Sobald ein Stückgut in einem Erfassungsbereich 23, 33 abgelegt wird oder zumindest teilweise in den Erfassungsbereich hineinragt, wird ein entsprechendes Signal an die Steuereinrichtung 70 übermittelt, welches das "letzte" Stückgut kennzeichnet und den Einlagerungsvorgang startet. Wie weit eine Arzneimittelverpackung in einen Erfassungsbereich hineinragen muss, um das vorgenannte Signal auszulösen, kann an der Steuereinrichtung oder am Auflageerfassungssensor bzw. am Sensorsystem selbst eingestellt werden.

In Fig. 2 ist ferner oberhalb der oberen Einlagerungseinrichtung 20 eine Eingabe- und/oder Ausgabeeinrichtung 5 angedeutet, über die Informationen bezüglich der einzulagernden Arzneimittelpackungen angezeigt und/oder eingegeben werden können. Beispielsweise ist es denkbar, dass an der Ein- und/oder Ausgabeeinrichtung 5 angezeigt wird, wie genau eine Arzneimittelpackung in dem Ablagebereich 21, 31 zu platzieren ist (d. h. in welcher Ausrichtung und auf welcher Grundfläche).

Oberhalb der Ablagebereiche 21, 31 ist an der Einlagerungseinrichtung ferner eine Messeinrichtung 25, 35 angeordnet, mit der die Dimensionen eines einzulagernden Stückguts ermittelt werden können, falls die Steuereinrichtung diese nicht anhand des Identifizierers ermitteln kann. Mit einer Messeinrichtung kann auch überprüft werden, ob ein Benutzer ein einzulagerndes Stückgut entsprechend den an der Ein- und/oder Ausgabeeinrichtung angezeigten Vorgaben abgelegt hat.

In alternativen Ausführungsformen kann die Messeinrichtung auch außerhalb der Kommissioniervorrichtung angeordnet sein und nur dann zum Einsatz kommen, wenn die Dimensionen nicht anhand des Identifizierers ermittelt werden können oder ggf. verifiziert werden sollen.

Wenn sichergestellt ist, dass die Dimensionen aller einzulagernden Stückgüter anhand des Identifizierers ermittelt werden können, kann auf die Messeinrichtung verzichtet werden. Dies ist denkbar, wenn die Steuereinrichtung auf eine ständig aktualisierte Datenbank zugreifen kann, die für jeden Identifizierer eines einzulagernden Stückgutes eindeutige Dimensionen enthält. Alternativ kann die Messeinrichtung auch (zusätzlich) als weitere Verifikationseinrichtung wie oben beschrieben betrieben werden.

Bei der in den Figuren 1 und 2 dargestellten ersten Ausführungsform ist die Wiegeeinrichtung außerhalb der Kommissioniervorrichtung angeordnet. Wie bereits erwähnt, kann sie auch in die Kommissioniervorrichtung integriert sein, was unter Bezugnahme auf die nachfolgenden Ausführungsformen dargestellt ist.

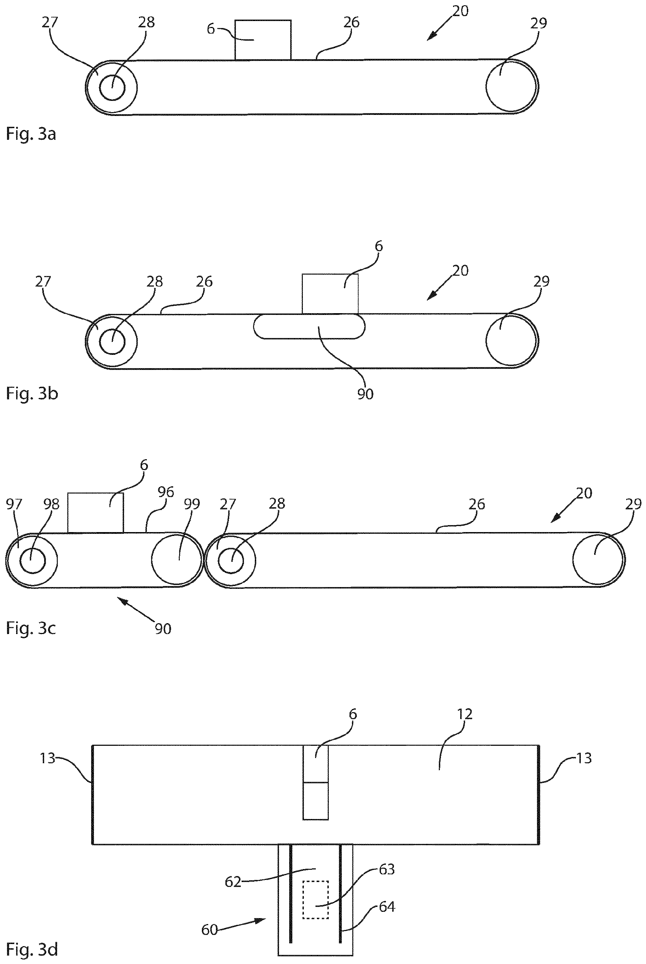

Die Figuren 3a bis 3d zeigen schematische Teilansichten weiterer bevorzugter Ausführungsformen der erfindungsgemäßen Kommissioniervorrichtung. Figur 3a zeigt schematisch eine Einlagerungseinrichtung 20, die in dieser Ausführungsform als Förderband ausgebildet ist, mit einer Umlenkrolle 29 sowie einer Antriebsrolle 27 und einem dazwischen verlaufenden Fördergurt 26. Auf dem Fördergurt ist schematisch ein Stückgut 6 angedeutet. Die Antriebsrolle 27 ist mit einem Antriebsmotor 28 gekoppelt, der die Antriebsrolle 27 dreht. Der zum Drehen der Antriebsrolle erforderliche Motorstrom des Antriebsmotors 28 ist abhängig von dem auf dem Fördergurt 26 aufliegenden Gewicht, so dass durch Messen des Motorstroms das Gewicht des auf dem Fördergurt aufliegenden Stückguts ermittelt werden kann. Hierzu ist es nicht erforderlich, dass nur ein Stückgut auf dem Fördergurt aufliegt, da der Motorstrom mit zunehmendem Gewicht ansteigt, so dass anhand des ansteigenden Motorstroms auch das Gewicht weiterer Stückgüter ermittelt werden kann.

Fig. 3b zeigt eine weitere schematische Teilansicht einer bevorzugten Ausführungsform, wobei bei dieser Ausführungsform die Kommissioniervorrichtung eine Wiegeeinrichtung 90 umfasst, die unterhalb eines Abschnitts des Fördergurts 26 angeordnet ist. Bei dieser Ausführungsform wird das Gewicht des Stückguts 6 auf dem Fördergurt 26 ermittelt, indem der Fördergurt über die Wiegeeinrichtung 90 bewegt wird. Damit bei dieser Ausführungsform das Gewicht eines Stückgutes zuverlässig ermittelt werden kann, ist es erforderlich, dass nur ein Stückgut über die Wiegeeinrichtung bewegt wird, um das Gewicht dieses Stückgutes zu ermitteln. Alternativ ist es möglich, eine bekannte Anzahl identischer Stückgüter über die Wiegeeinrichtung zu bewegen, um das Gewicht der einzelnen Stückgüter zu ermitteln. Dazu ist es jedoch unbedingt erforderlich, dass die genaue Anzahl der Stückgüter bekannt ist.

Figur 3c zeigt eine weitere schematische Teilansicht einer bevorzugten Ausführungsform der Kommissioniervorrichtung. Auch bei dieser Ausführungsform umfasst die Kommissioniervorrichtung eine Wiegeeinrichtung 90, die bei dieser Ausführungsform entsprechend dem Förderband der in Figur 3a dargestellten Ausführungsform ausgebildet ist. Die als Förderband ausgebildete Wiegeeinrichtung 90 umfasst eine Umlenkrolle 99, eine Antriebsrolle 97 und einen mit der Antriebsrolle 97 gekoppelten Antriebsmotor 98. Über den zur Bewegung des Fördergurts 96 erforderlichen Motorstrom wird das Gewicht des auf dem Fördergurt 96 aufliegenden Stückguts 6 ermittelt. Bei der in Fig. 3c gezeigten Ausführungsform ist der Wiegeeinrichtung 90 eine als Förderband ausgebildete Einlagerungseinrichtung 20 mit einer Umlenkrolle 29, einer Antriebsrolle 27 und einem Fördergurt 26 nachgeordnet. Nach Ermittlung des Gewichts des Stückguts 6 wird dieses von der Wiegeeinrichtung auf die Einlagerungseinrichtung bewegt, mit der es schließlich in einen Zugriffsbereich eines Greifers (nicht dargestellt) bewegt wird, der ein Stückgut von der Einlagerungseinrichtung aufnimmt. Die dargestellte Ausführungsform hat den Vorteil, dass die Einlagerungseinrichtung 20 wie eine Speichereinrichtung als Zwischenpuffer für Stückgüter dienen kann, während die Wiegeeinrichtung 90 kontinuierlich das Gewicht von Stückgütern ermitteln kann, die dann an die Einlagerungseinrichtung übergeben werden.

Figur 3d zeigt eine weitere schematische Teilansicht einer bevorzugten Ausführungsform der Kommissioniervorrichtung. In dieser Darstellung ist schematisch eine Draufsicht auf einen Regalboden 12 mit zwei darauf liegenden Stückgütern 6 gezeigt. Vor dem Regalboden 12 ist schematisch ein Greifer 60 mit einem Ablagetisch 62 und Greifbacken 64 dargestellt. Unterhalb des Ablagetisches 62 ist gestrichelt ein Wiegemittel 63 angedeutet, mit dem das Gewicht eines auf den Ablagetisch 62 bewegten Stückguts ermittelt werden kann. Bei dieser Ausführungsform ist es auch möglich, das Gewicht mehrerer gleicher Stückgüter zu ermitteln, wenn diese gleichzeitig auf den Ablagetisch 62 bewegt werden. Alternativ ist es denkbar, das Gewicht mehrerer unterschiedlicher Stückgüter zu ermitteln, die nacheinander auf den Ablagetisch 62 bewegt werden.

Die Figuren 4a - 4d zeigen schematische Ansichten jeweils eines Regalbodens 12 mit unterschiedlich angeordneten Lagerabschnitten. Wie vorstehend erläutert, ist es Aufgabe der vorliegenden Erfindung, ein Durchbiegen eines Regalbodens zu reduzieren. Dazu ist erfindungsgemäß vorgesehen, dass einem Regalboden mindestens ein Lagerabschnitt zugeordnet ist, der eine beliebige Anzahl von Lagerplätzen aufweisen kann und für den in einer Lagerabschnitt-Datenbank der Steuereinrichtung eine Gewichtsvorgabe gespeichert ist. Bei der in Figur 4a gezeigten Ausführungsform ist dem von zwei Regalwänden 13 getragenen Regalboden 12 lediglich ein Lagerabschnitt 13(01) zugeordnet, der durch ein gestricheltes Rechteck angedeutet ist, wobei dieses Rechteck lediglich den Lagerabschnitt veranschaulichen soll. Wie weit sich der Lagerabschnitt an den Stirnseiten bzw. Seitenwänden erstreckt, hängt von den konstruktiven Details der Kommissioniervorrichtung als solcher und des die Stückgüter auf den Regalboden und von diesem bewegenden Greifers ab. Im einfachsten, in Fig. 4a dargestellten Fall, in dem dem Regalboden nur ein Lagerabschnitt zugeordnet ist, kann die Gewichtsvorgabe vorsehen, dass das Maximalgewicht eines auf dem Regalboden lagerbaren Stückguts z. B. 100 g nicht überschreiten darf. Darüber hinaus kann die Gewichtsvorgabe auch die Anzahl der maximal auf dem Regalboden lagerbaren Stückgüter, alternativ oder zusätzlich auch ein Maximalflächengewicht (Gewicht pro cm2 Auflagefläche des Stückguts) für den Lagerabschnitt und/oder ein Maximalgesamtgewicht (aller Stückgüter des Lagerabschnitts) umfassen. Die Gewichtsvorgabe als solche, unabhängig davon, wie sie im Detail ausgestaltet ist, basiert zum einen auf der Materialbeschaffenheit des Regalbodens als solchem, der Abstützung des Regalbodens (in der vorliegenden Ausführungsform "nur" durch die Regalwände 13) sowie dem Abstand der Abstützelemente (Regalwände) zueinander.

Figur 4b zeigt eine weitere schematische Ansicht eines Regalbodens, wobei dem Regalboden 12, der sich wiederum zwischen zwei Regalwänden 13 erstreckt, fünf Lagerabschnitte 13(10), 13(11), 13(12), 13(11), 13(10) zugeordnet sind. Um eine Durchbiegung des Regalbodens zu vermeiden, ist es sinnvoll bzw. notwendig, die schwereren Stückgüter näher an den tragenden Regalwänden 13 einzulagern. Die den Lagerabschnitten zugeordneten Gewichtsvorgaben können beispielsweise vorsehen, dass das maximale Gewicht eines in einem Lagerabschnitt lagerbaren Stückguts für die Lagerabschnitte 13(10) 100 g, für die Lagerabschnitte 13(11) 80 g und für den mittleren Lagerabschnitt 13(12) nur 60 g beträgt. Alternativ oder zusätzlich sind nach innen abnehmende Maximalflächengewichte und/oder Maximalgesamtgewichte denkbar.

Figur 4c zeigt eine weitere schematische Ansicht eines Regalbodens, wobei dem Regalboden 12, der sich zwischen zwei Regalwänden 13 erstreckt und zusätzlich von einer Regalrückwand 15 getragen wird, 16 Lagerabschnitte 13(20) - 13(31) zugeordnet sind. In Figur 4c ist beispielhaft jedem Lagerabschnitt 13(xx) ein Maximalgewicht (100 g - 80 g) zugeordnet. Entsprechend den obigen Überlegungen ist das Maximalgewicht der Lagerabschnitte 13(31), die am "weitesten" von den tragenden Elementen entfernt sind, am geringsten.

Figur 4d zeigt eine weitere schematische Ansicht eines Regalbodens, wobei dem Regalboden 12, der sich zwischen zwei Regalwänden 13 erstreckt und zusätzlich von einer Regalrückwand 15 getragen wird, sechs Lagerabschnitte 13(40) - 13(52) zugeordnet sind. Die in Figur 4d dargestellte Anordnung der Lagerabschnitte differenziert stärker zwischen den maximal zulässigen Gewichten, verwendet aber größere Lagerabschnitte als solche.

Die genaue Verteilung der Lagerabschnitte auf dem Regalboden hängt von den oben genannten Kriterien ab und kann beliebig variiert werden. Bei sehr tiefen Regalen wäre es auch denkbar, dass in der Mitte ein Stützelement eingebaut wird, wobei in diesem Bereich dann wieder Lagerabschnitte mit z. B. höherem Maximalgewicht angeordnet werden können. Auch in Abhängigkeit von den einzulagernden Stückgütern ist es möglich, die Lagerabschnitte z. B. dem durchschnittlichen Stückgutgewicht anzupassen.

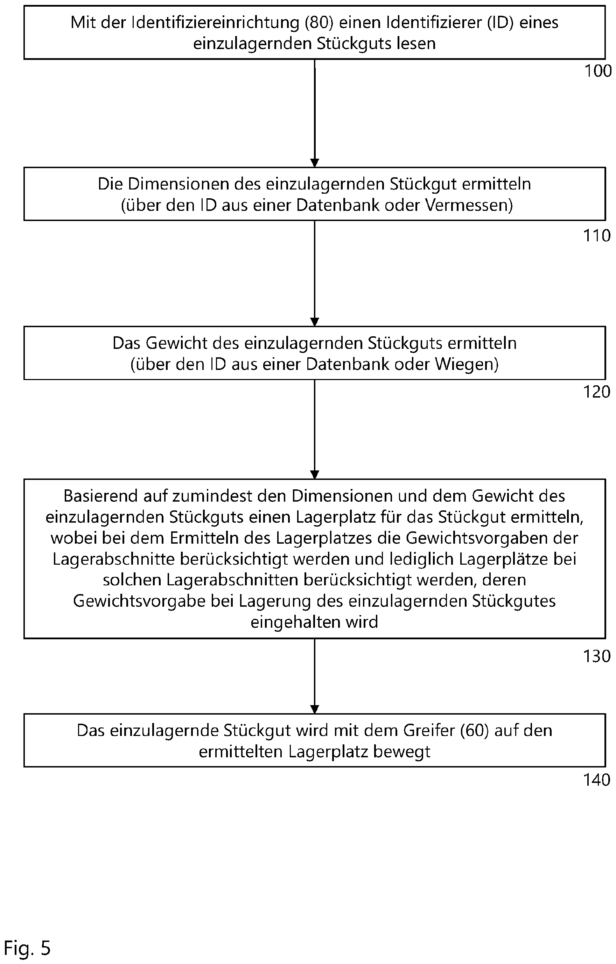

Figur 5 zeigt ein Flussdiagramm einer bevorzugten Ausführungsform des erfindungsgemäßen Verfahrens, das nachfolgend beschrieben wird. In einem ersten Schritt 100 wird ein Identifizierer ID eines einzulagernden Stückguts mit der Identifizierungseinrichtung 80 ausgelesen. Wie genau der Identifizierer des einzulagernden Stückguts aufgebaut ist, ist für die vorliegende Erfindung unerheblich. Es kann sich beispielsweise um einen Barcode handeln, der mit einer entsprechenden Identifizierungseinrichtung gelesen wird. Es ist aber auch jede andere Art von Identifizierer denkbar, der die für den Anwendungsfall erforderlichen Informationen bereitstellen kann und der mit einer entsprechenden Identifizierungseinrichtung automatisch ausgelesen werden kann. In einem nachfolgenden Schritt 110 werden die Dimensionen des einzulagernden Stückguts ermittelt. Dies kann dadurch erfolgen, dass anhand des Identifizierers in einer Datenbank, auf die die Steuereinrichtung der Kommissioniervorrichtung zugreifen kann, geprüft wird, ob die Dimensionen dieses Stückguts bekannt sind. Ist dies der Fall, werden die gespeicherten Dimensionen verwendet. Ist dies nicht der Fall, erfolgt eine Vermessung des einzulagernden Stückgutes durch eine mit der Steuereinrichtung gekoppelte Messeinrichtung. Diese kann Bestandteil der Kommissioniervorrichtung sein, sie kann aber auch außerhalb der Kommissioniervorrichtung angeordnet sein. In einem Schritt 120 wird das Gewicht des einzulagernden Stückguts ermittelt, und zwar nach dem zu Schritt 110 beschriebenen Verfahren, indem anhand der ID in einer mit der Steuereinrichtung gekoppelten Datenbank geprüft wird, ob das Gewicht zu diesem Stückgut bekannt ist. Ist dies nicht der Fall, wird das Gewicht des Stückguts mit einer Wiegeeinrichtung ermittelt, die integraler Bestandteil der Kommissioniervorrichtung sein kann oder extern angeordnet und mit der Steuereinrichtung gekoppelt ist. In Abhängigkeit von der "Qualität" und dem Umfang der Datenbank und der zu einem Identifizierer gespeicherten entsprechenden Informationen ist es denkbar, dass die Kommissioniervorrichtung weder eine Messeinrichtung noch eine Wiegeeinrichtung aufweist, und zwar für den Fall, dass sichergestellt ist, dass zu jedem Identifizierer eines Stückgutes sowohl die Dimensionen als auch das Gewicht bekannt sind. Die Reihenfolge der vorgenannten Schritte 110, 120 ist für das erfindungsgemäße Verfahren unerheblich, sie können nacheinander in beliebiger Reihenfolge oder auch gleichzeitig ausgeführt werden.

Erfindungsgemäß betreibt die Steuereinrichtung der Kommissioniervorrichtung eine Lagerabschnitt-Datenbank, in der Gewichtsvorgaben für die Lagerabschnitte der Regalböden gespeichert sind oder z.B. basierend auf Kennzahlen zu den verwendeten Materialien berechnet werden. Diese Datenbank kann in mit der Steuereinrichtung gekoppelten Speichern betrieben werden, alternativ ist es denkbar, dass die Steuereinrichtung lediglich Zugriff auf diese Datenbank hat, die beispielsweise auf einem entfernt angeordneten Server gespeichert ist.

In einem Schritt 130 wird anhand der Dimensionen und des Gewichts des einzulagernden Stückguts ein Lagerplatz für das Stückgut ermittelt. Dabei werden nicht, wie aus dem Stand der Technik bekannt, nur die Dimensionen des Stückguts berücksichtigt, sondern auch die Gewichtsvorgaben der Lagerabschnitte der Regalböden der Kommissioniervorrichtung, und es werden nur Lagerplätze in solchen Lagerabschnitten berücksichtigt und für die Ermittlung zugelassen, deren Gewichtsvorgabe bei der Lagerung des einzulagernden Stückguts eingehalten wird. Wenn z. B. auf einem Regalboden X mehrere Lagerplätze zur Verfügung stehen, die Gewichtsvorgabe für die Lagerabschnitte dieses Regalbodens aber besagt, dass die Stückgüter maximal 100 g wiegen dürfen, das einzulagernde Stückgut aber 120 g wiegt, werden diese Lagerplätze nicht berücksichtigt. Wenn bei der Ermittlung eines Lagerplatzes aufgrund der Dimensionen und des Gewichts des einzulagernden Stückgutes mehrere mögliche Lagerplätze zur Verfügung stehen, werden weitere Kriterien zur Ermittlung des endgültigen Lagerplatzes herangezogen. Beispielsweise kann dann vorgesehen werden, dass immer der Lagerplatz als nächster befüllt wird, von dem ein Stückgut am schnellsten ausgelagert werden kann. Entscheidend ist, dass das Stückgut nicht auf Lagerplätze eingelagert wird, deren Gewichtsvorgaben (über den Lagerabschnitt) dies nicht zulassen. Wie die Gewichtsvorgabe für einen Lagerabschnitt genau aussieht, wurde bereits weiter oben ausführlich beschrieben.

In einem Schritt 140 wird das einzulagernde Stückgut mit dem Greifer 60 auf den ermittelten Lagerplatz bewegt.

Bei einer vorstehend beschriebenen Ausführungsform der Kommissioniervorrichtung wird das Gewicht des Stückguts erst mit dem Greifer ermittelt, so dass der vorstehend beschriebene Schritt 130 erst dann ausgeführt werden kann, wenn ein Stückgut mit dem Greifer 60 bewegt wurde und somit das Gewicht ermittelt wurde. Aufgrund der Geschwindigkeit der Lagerplatzbestimmung ist es jedoch regelmäßig unproblematisch, das Gewicht des Stückguts erst zu einem "späten" Zeitpunkt des Einlagerungsvorgangs zu bestimmen.

## Patentansprüche

1. Verfahren zum Lagern von Stückgut in einer Kommissioniervorrichtung (1) mit
zumindest einer Regalreihe (10) mit einer Mehrzahl von Regalböden (12), wobei jeder Regalboden (12) zumindest einen Lagerabschnitt (13(xx)) mit zumindest einem Lagerplatz aufweist, einer Steuereinrichtung (70), einer Einlagerungseinrichtung (20, 30), einer Identifizierungseinrichtung (80) sowie einem Bediengerät (50) mit einem Greifer (60) für Stückgut,
wobei die Steuereinrichtung eine Lagerabschnitt-Datenbank betreibt oder auf diese zugreifen kann, die für eine Mehrzahl von Lagerabschnitten (13(xx)) zumindest eine Gewichtvorgabe aufweist, wobei
a) mit der Identifizierungseinrichtung (80) ein Identifizierer (ID) eines einzulagernden Stückguts gelesen wird,
b) die Dimensionen des einzulagernden Stückguts ermittelt werden,
c) das Gewicht des einzulagernden Stückguts ermittelt wird,
d) basierend auf zumindest den Dimensionen und dem Gewicht des einzulagernden Stückguts ein Lagerplatz für das Stückgut ermittelt wird, wobei bei dem Ermitteln des Lagerplatzes die Gewichtsvorgaben der Lagerabschnitte berücksichtigt werden und lediglich Lagerplätze bei solchen Lagerabschnitten berücksichtigt werden, deren Gewichtsvorgaben bei Lagerung des einzulagernden Stückgutes eingehalten werden,
e) das einzulagernde Stückgut mit dem Greifer (60) auf den ermittelten Lagerplatz bewegt wird.

2. Verfahren zum Lagern von Stückgut in einer Kommissioniervorrichtung (1) nach Anspruch 1,
**dadurch gekennzeichnet, dass** die Gewichtsvorgabe ein Maximalgewicht eines Stückgutes für einen Lagerabschnitt umfasst.

3. Verfahren zum Lagern von Stückgut in einer Kommissioniervorrichtung (1) nach einem der Ansprüche 1 oder 2,
**dadurch gekennzeichnet, dass** die Gewichtsvorgabe ein Maximalflächengewicht für einen Lagerabschnitt umfasst.

4. Verfahren zum Lagern von Stückgut in einer Kommissioniervorrichtung (1) nach einem der Ansprüche 1 - 3,
**dadurch gekennzeichnet, dass** die Gewichtsvorgabe ein Maximalgesamtgewicht für einen Lagerabschnitt umfasst und die Lagerabschnitt-Datenbank für Lagerabschnitte mit Maximalgesamtgewicht ferner eine Ist-Belegung aufweist, und
dass nach dem Ermitteln des Lagerplatzes für das einzulagernde Stückgut die Ist-Belegung des dem Lagerplatz zugeordneten Lagerabschnitts um das Gewicht des einzulagernden Stückguts erhöht wird.

5. Verfahren zum Lagern von Stückgut in einer Kommissioniervorrichtung (1) nach einem der Ansprüche 1 - 4,
**dadurch gekennzeichnet, dass** das Gewicht eines einzulagernden Stückguts auf der Basis des Identifizierers ermittelt wird.

6. Verfahren zum Lagern von Stückgut in einer Kommissioniervorrichtung (1) nach einem der Ansprüche 1 - 5, wobei die Kommissioniervorrichtung (1) eine Wiegeeinrichtung (90) umfasst,
**dadurch gekennzeichnet, dass** das Gewicht eines einzulagernden Stückguts mit der Wiegeeinrichtung ermittelt wird.

7. Verfahren zum Lagern von Stückgut in einer Kommissioniervorrichtung (1) nach einem der Ansprüche 1 - 6, wobei die Einlagerungseinrichtung (20) ein Förderband mit einem Antriebsmotor (28) und einem Fördergurt (26) umfasst,
**dadurch gekennzeichnet, dass** das Gewicht des einzulagernden Stückguts ermittelt wird, indem der zum Bewegen des Fördergurts (26) notwendige Motorstrom gemessen und basierend darauf das Gewicht ermittelt wird.

8. Kommissioniervorrichtung (1) für Stückgut, aufweisend
zumindest eine Regalreihe (10) mit einer Mehrzahl von Regalböden (12), wobei jeder Regalboden (12) zumindest einen Lagerabschnitt (13(xx)) mit zumindest einem Lagerplatz aufweist,
ein vor der Regalreihe horizontal in einer X-Richtung (X-Achse) und vertikal in einer Z-Richtung (Z-Achse) verfahrbares, einen Greifer (60) aufweisendes Bediengerät (50),
zumindest eine Einlagerungseinrichtung (20, 30), mit welcher Stückgüter in der Kommissioniervorrichtung (1) bewegt werden können und von welcher der Greifer (60) Stückgüter entnehmen kann,
zumindest eine Identifizierungseinrichtung (80) zum Lesen eines Identifizierer (ID) eines einzulagernden Stückguts,
eine Entladeeinrichtung (40), an welche Stückgüter zum Auslagern aus der Kommissioniervorrichtung (1) übergeben werden können,
eine mit dem Bediengerät (50), der Identifizierungseinrichtung (80) und der Einlagerungseinrichtung (20, 30) gekoppelte Steuereinrichtung (70), wobei die Steuereinrichtung eine Lagerabschnitt-Datenbank betreibt bzw. auf diese zugreifen kann, die für eine Mehrzahl von Lagerabschnitten (13(xx)) zumindest eine Gewichtvorgabe aufweist, wobei die Steuereinrichtung ausgebildet ist, die Verfahrensschritte entsprechend der Ansprüche 1 - 7 auszuführen.

9. Kommissioniervorrichtung (1) für Stückgut nach Anspruch 8, **dadurch gekennzeichnet, dass** die Kommissioniervorrichtung (1) eine Wiegeeinrichtung (90) zum Ermitteln des Gewicht des einzulagernden Stückguts umfasst.

10. Kommissioniervorrichtung (1) für Stückgut nach Anspruch 8, **dadurch gekennzeichnet, dass** die Einlagerungseinrichtung (20) ein Förderband mit einem Antriebsmotor (28) und einem Fördergurt (26) umfasst, wobei das Gewicht des einzulagernden Stückguts ermittelt wird, indem der zum Bewegen des Fördergurts (26) notwendige Motorstrom gemessen und basierend darauf das Gewicht ermittelt wird.

11. Kommissioniervorrichtung (1) für Stückgut nach Anspruch 9, **dadurch gekennzeichnet, dass** die Einlagerungseinrichtung (20) ein Förderband mit einem Fördergurt (26) umfasst und die Wiegeeinrichtung (90) derart unter einem Abschnitt des Fördergurts (26) angeordnet ist, dass bei dem Bewegen des einzulagernden Stückguts auf dem Fördergurt über die Wiegeeinrichtung das Gewicht ermittelt wird.

12. Kommissioniervorrichtung (1) für Stückgut nach Anspruch 9, **dadurch gekennzeichnet, dass** die Wiegeeinrichtung (90) ein Förderband mit einem Antriebsmotor (98) und einem Fördergurt (96) umfasst, wobei das Gewicht des einzulagernden Stückguts ermittelt wird, indem der zum Bewegen des Fördergurts notwendige Motorstrom gemessen und basierend darauf das Gewicht ermittelt wird, und dass
die Einlagerungseinrichtung (20) stromab der Wiegeeinrichtung (90) angeordnet ist und ebenfalls ein Förderband umfasst, an welches das einzulagernde Stückgut übergeben wird.

13. Kommissioniervorrichtung (1) für Stückgut nach Anspruch 8, **dadurch gekennzeichnet, dass** der Greifer (60) des Bediengeräts (50) ein Wiegemittel (63) umfasst, mit welchem das Gewicht eines auf den Greifer (60) bewegten Stückguts ermittelbar ist.

14. Kommissioniervorrichtung (1) für Stückgut nach einem der Ansprüche 8 - 13, **dadurch gekennzeichnet, dass** die Kommissioniervorrichtung (1) Regalböden mit unterschiedlicher Traglast aufweist.
